# FASCICULE DE BREVET EUROPEEN

(11) **EP 2 170 644 B1**
(45) Date de publication et mention de la délivrance du brevet: **21.08.2013**
(21) Numéro de dépôt: 08759174.9
(22) Date de dépôt: 11.06.2008
(51) Int. Cl.: B60K 35/00, B60K 37/00, G01D 13/22, G12B 11/04

(54) **PROCEDE D'AFFICHAGE D'UN POINTEUR SUR UNE SURFACE D'AFFICHAGE D'UN TABLEAU DE BORD DE VEHICULE**
VERFAHREN ZUR ANZEIGE EINES ZEIGERS AUF EINER ANZEIGEFLÄCHE EINER FAHRZEUGINSTRUMENTENTAFEL
METHOD OF DISPLAYING A POINTER ON A DISPLAY AREA OF A VEHICLE INSTRUMENT PANEL

(30) Priorité: 20.06.2007 DE 102007029054
(43) Date de publication de la demande: 07.04.2010
(73) Titulaire: Johnson Controls Technology Company, Plymouth, Michigan 48170 (US)
(72) Inventeur: BOUTIN, Tony, 95520 Osny (FR)
(74) Mandataire: Gevers France
(86) Numéro de dépôt international: PCT/EP2008/004661
(87) Numéro de publication internationale: WO 2008/155052

(56) Documents cités:
- DE-A1- 10 008 211
- DE-A1- 10 109 905
- DE-A1-102005 015 178
- FR-A- 2 869 139
- US-A1- 2005 280 521

## Description

L'invention concerne le domaine des indicateurs de tableau de bord de véhicule.

Dans un véhicule automobile, le tableau de bord regroupe les différents instruments nécessaires à la navigation et comprend, de manière classique, des indicateurs mécaniques, tels que des mouvements, pour indiquer la vitesse du véhicule, la vitesse de rotation du moteur ou le pourcentage de carburant restant dans le réservoir.

La tendance actuelle vise à remplacer les traditionnels indicateurs mécaniques par des indicateurs numériques avec un écran d'affichage du type LCD ou TFT. Les indicateurs numériques présentent l'avantage de pouvoir être facilement configurables en fonction des différentes gammes de véhicules. Ainsi, pour configurer un indicateur numérique, seul un paramétrage logiciel est nécessaire, les composants électroniques demeurant inchangés.

Malgré tous les avantages que présentent les indicateurs numériques, ils ne permettent pas de reproduire le comportement des indicateurs mécaniques à l'identique. En particulier, les indicateurs de vitesse traditionnels, c'est-à-dire avec une aiguille montée sur un pivot disposé au centre d'un cadran, ne sont pas représentés de manière satisfaisante.

Lors d'une accélération ou décélération du véhicule, la position de l'aiguille de l'indicateur, aussi bien mécanique que numérique, doit être modifiée afin que cette dernière pointe toujours vers la graduation correspondant à la valeur de la vitesse du véhicule. Cette modification de l'indicateur est réalisée en temps réel pour un indicateur mécanique traditionnel, le conducteur ayant alors la sensation de maîtriser son véhicule.

Avec les indicateurs numériques, la fréquence de rafraîchissement de l'écran d'affichage, comprise classiquement entre 50 et 60Hz, ne permet pas d'afficher de manière continue et fluide le déplacement de l'aiguille. Le mouvement saccadé de l'aiguille de l'indicateur est perceptible à l'oeil nu par le conducteur, ce qui constitue une source d'insatisfaction mais d'abord empêche le conducteur de percevoir un changement.

Document US200510280521 décrit un procédé d'affichage d'une aiguille d'un tableau de bord de véhicule dans lequel une ombre est affichée pour suivre ladite aiguille en réponse à un changement de la position d'affichage de laiguille. Il précise que la surface de l'ombre est fonction de l'amplitude de la modification. En effet, plus grande est la surface de l'ombre, plus grand est l'écart d'amplitude.

Afin de pallier ces inconvénients, la demanderesse propose un procédé d'affichage d'un pointeur sur une surface d'affichage d'un tableau de bord de véhicule selon revendication 1.

Un tel procédé permet au conducteur de percevoir le changement de la position du pointeur de manière fluide. On entend par caractéristique physique du pointeur aussi bien la forme, la couleur, la transparence, le rendu flou, le contraste, la luminosité, la brillance, etc.

De préférence, on augmente l'épaisseur du pointeur en fonction de l'écart (ΔP) entre les première et deuxième positions calculées.

Le déplacement du pointeur entre les première et deuxième positions est alors continu à l'oeil nu.

Selon une autre caractéristique de l'invention, on augmente la transparence du pointeur, affiché à ladite deuxième position, en fonction de l'écart (ΔP) entre les première et deuxième positions calculées.

Selon une autre caractéristique de l'invention, on rend flou les contours du pointeur, affiché à ladite deuxième position (P2), en fonction de l'écart (ΔP) entre les première et deuxième positions calculées.

De préférence, on affiche simultanément le pointeur aux première et deuxième positions.

De préférence encore, le pointeur affiché à la première position est plus transparent que le pointeur affiché à la deuxième position.

De préférence toujours, les caractéristiques physiques du pointeur sont modifiées de manière uniforme.

L'invention sera mieux comprise à l'aide du dessin annexé sur lequel:
- la figure 1 représente une première position du pointeur (P1) sur un écran d'affichage d'une première forme de réalisation d'un indicateur de vitesse;
- la figure 2 représente une deuxième position du pointeur (P2) de l'indicateur de la figure 1 ;
- la figure 3 représente, sur l'indicateur de la figure 1, l'affichage du déplacement du pointeur de la première à la deuxième position selon une première mise en oeuvre du procédé de l'invention;
- la figure 4 est une représentation schématique du pointeur affiché à la deuxième position (P2);
- la figure 5 représente une deuxième mise en oeuvre du procédé de l'invention avec un pointeur épaissi aligné sur la deuxième position (P2);
- la figure 6 représente le pointeur affiché simultanément aux deuxième et troisième positions conformément à une troisième mise en oeuvre du procédé de l'invention;
- la figure 7 représente une deuxième forme de réalisation d'un indicateur; et
- la figure 8 représente une troisième forme de réalisation d'un indicateur.

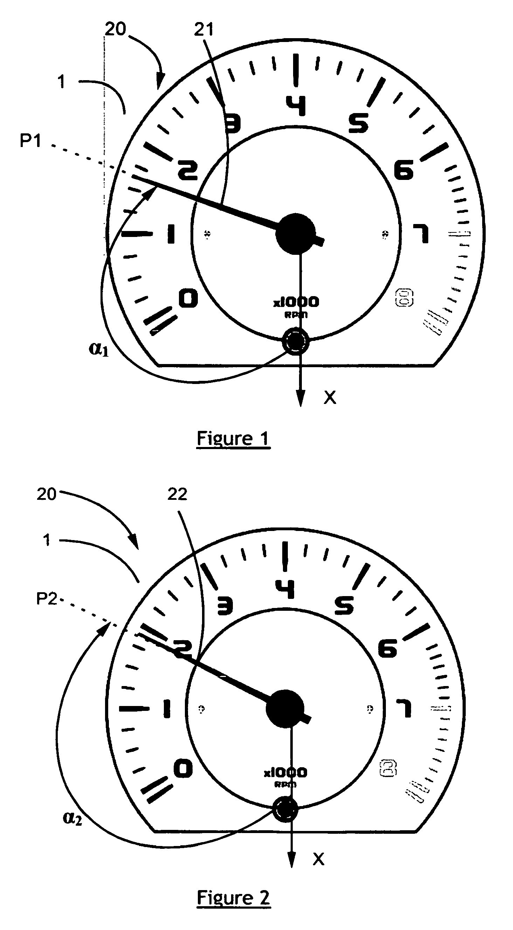

En référence à la figure 1, un cadran circulaire 20 d'affichage de la vitesse de rotation d'un moteur est affiché sur un écran d'affichage 1 d'une première forme de réalisation d'un indicateur de tableau de bord de véhicule automobile. Un pointeur 21 est affiché sur l'écran 1 et pointe vers une graduation du cadran 20.

L'invention est ici décrite pour un indicateur de vitesse de rotation du moteur monté sur le tableau de bord du véhicule. Le tableau de bord est ici défini au sens large et regroupe aussi bien les indicateurs disposés sur la planche de bord, montés traditionnellement derrière le volant, que les indicateurs disposés dans la partie centrale du véhicule, avec l'autoradio, ou à proximité des passagers avant ou arrière.

Un capteur de vitesse du moteur, disposé dans le moteur du véhicule, mesure la rotation de ce dernier (nombre de tours par minute). Des mesures sont réalisées à intervalles de temps réguliers et sont transmises à un calculateur de bord qui détermine la position d'affichage du pointeur 21 sur le cadran 20 en fonction de la mesure du capteur.

En référence à la figure 1, suite à une première mesure effectuée par le capteur (1600 tours/minute), le pointeur 21 est affiché à une première position P1 sur le cadran 20. Le pointeur 21 fait un angle α₁ de 110° par rapport à un axe X partant du centre du cadran et orienté vers le bas, l'angle étant positif dans le sens horaire.

Par souci de clarté, on utilise, dans la suite de la description, des références différentes pour désigner l'affichage du pointeur à chacune de ses positions (P1,P2,P3).

En référence à la figure 2, suite à une deuxième mesure effectuée par le capteur (1900 tours/minute), le pointeur est affiché à une deuxième position P2 sur le cadran 10. Le pointeur 22, i.e. l'affichage du pointeur à la position P2, fait un angle α₂ de 120° par rapport à l'axe X.

Lorsqu'on affiche successivement les pointeurs 21, 22 sur le cadran 20, suite à deux mesures successives du capteur, on observe un écart ΔP entre les deux extrémités des pointeurs qui est visible à l'oeil nu. Le conducteur du véhicule perçoit un mouvement saccadé du pointeur.

Une rotation du pointeur dans le cadran de 520° par seconde, avec un taux de rafraîchissement de l'écran d'affichage de 60Hz (c'est-à-dire avec une nouvelle image affichée toutes les 16ms), entraîne un écart angulaire de l'ordre de 8.7° entre deux affichages successifs du pointeur. Ainsi, pour un pointeur de 7cm de longueur, la distance entre deux positions successives du pointeur est de l'ordre du centimètre.

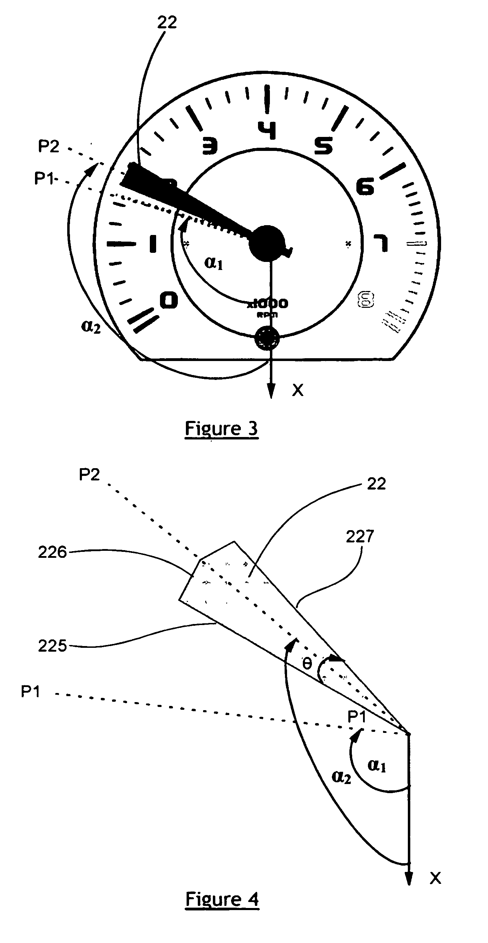

Pour remédier à cet inconvénient, en référence à la figure 3, on affiche tout d'abord le pointeur 21 sur la surface d'affichage à ladite première position P1 calculée au moyen de la première mesure réalisée par le capteur. Lors de l'affichage du pointeur 22 à la position P2, calculée au moyen de la deuxième mesure réalisée par le capteur, on augmente l'épaisseur du pointeur 22 en fonction de l'écart ΔP entre les première et deuxième positions, de préférence, de manière proportionnelle.

En référence à la figure 4, l'épaisseur du pointeur 22 est ici une épaisseur radiale d'angle θ. La valeur de l'angle θ est calculée en fonction de l'écart ΔP entre les positions P1 et P2 de manière à ce que le pointeur 22, affiché à la position P2, soit assez fin pour ne pas recouvrir le pointeur 21, affiché précédemment à la position P1, et assez large pour assurer une fluidité visuelle de l'affichage du pointeur entre les deux positions successives P1 et P2. En règle général, l'angle θ est inférieur à l'écart ΔP=(α₂-α₁).

Toujours en référence à la figure 4, le pointeur épaissi 22 se présente sous la forme d'un secteur d'un disque délimité par un segment inférieur 225, un arc de cercle 226 et un segment supérieur 227, le segment inférieur 225 étant disposé avant le segment supérieur 227 lorsque l'on parcourt le cadran 20 dans le sens horaire à partir de l'axe orienté X. Il va de soi que les segments supérieur 227 et inférieur 225 peuvent également être connectés par un segment de droite ou tout autre courbe géométrique

En référence aux figures 3 et 4, dans une première mise en oeuvre du procédé de l'invention, le pointeur 22 est centré sur la position P2. C'est-à-dire que la droite, passant par le centre du cadran 20 et indiquant la position P2 (120°), est une bissectrice du pointeur 22 d'épaisseur θ=5°. Le pointeur 22 pointe vers les graduations de 1750 tours/minute à 2000 tours/minute.

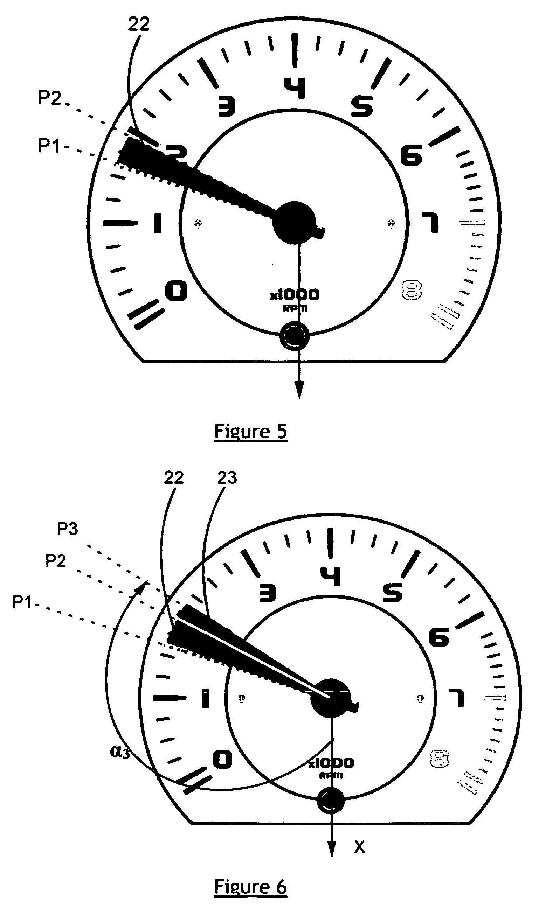

Dans une deuxième mise en oeuvre du procédé de l'invention, en référence à la figure 5, le pointeur 22 est aligné sur la position P2. C'est-à-dire que la droite, passant par le centre du cadran et indiquant la position P2 (120°), est alignée avec le segment supérieur 227 du pointeur 22 d'angle d'ouverture θ=5°. Le pointeur 22 pointe vers les graduations de 1650 tours/minute à 1900 tours/minute.

L'affichage d'un pointeur plus épais permet de rendre plus fluide le mouvement du pointeur. Pour le conducteur, le pointeur semble se déplacer de manière continue entre les première et deuxième positions.

Dans une troisième mise en oeuvre du procédé de l'invention, en référence à la figure 6, un pointeur 23 est affiché à la position P3 (α₃=125°), calculée à partir d'une troisième mesure postérieure à la deuxième mesure du capteur, simultanément au pointeur 22 affiché à la position P2. L'épaisseur du pointeur 23 est supérieure à celle du pointeur 22 car l'écart entre les positions P1 et P2 (ΔP₁=α₂-α₁=10°) est supérieur à l'écart entre les positions P2 et P3 (ΔP₂=α₃-α₂=5°).

Les deux pointeurs 22, 23 sont affichés simultanément de manière à assurer une continuité et une fluidité de l'affichage de pointeurs successifs. Le conducteur du véhicule a l'impression que le pointeur laisse une trace derrière lui au fur et à mesure de son déplacement. Comme on peut le remarquer sur la figure 6, le pointeur 22 a une transparence supérieure au pointeur 23 de manière à ce que le dernier pointeur affiché (ici le pointeur 23) soit plus visible que les affichages antérieurs des pointeurs (ici le pointeur 22). De préférence, on n'affiche pas plus de trois positions successives du pointeur simultanément.

Dans une quatrième mise en oeuvre du procédé de l'invention, on modifie la couleur du pointeur en fonction de l'écart de position avec la dernière position du pointeur affiché. Ainsi, plus l'écart est important, plus la couleur du pointeur est vive. On colore, par exemple, le pointeur en rouge pour des écarts importants et en blanc pour des écarts faibles.

Dans une cinquième mise en oeuvre du procédé de l'invention, on rend flou les contours du pointeur en fonction de l'écart entre deux positions successives du pointeur. Ainsi, plus l'écart est important, plus les contours du pointeur sont flous. Le contraste entre la couleur du pointeur et la couleur de la surface d'affichage est de plus en plus faible à mesure que l'on se rapproche des contours du pointeur. Pour des écarts de position importants, le segment inférieur 225, l'arc de cercle 226 et le segment supérieur 227 sont de la même couleur que la surface d'affichage, en l'occurrence noir.

Le rendu flou est différent de l'effet de transparence. La transparence est une caractéristique globale qui s'applique à tout le pointeur, aussi bien à son centre que son contour, tandis que le rendu flou s'applique du contour du pointeur vers son centre. La perception des effets est différente, le rendu flou du pointeur étant préféré pour "lisser" les contours du pointeur et favoriser la perception de vitesse.

Il va de soi que toute combinaison de modifications de caractéristiques physiques du pointeur (forme, couleur, transparence, rendu flou, contraste, luminosité, brillance ou dégradé) conviendrait également. Il va également de soi que ces modifications peuvent être uniformes ou accentuées au voisinage de la première et/ou deuxième position du pointeur. Une accentuation des modifications aux différentes positions permet de rendre encore plus visible et fluide le déplacement du pointeur. Les différentes combinaisons possibles permettent à l'homme du métier de créer des indicateurs avec des pointeurs "sur mesure" lui permettant d'avoir des pointeurs affichés visiblement tout en conservant une perception fluide du mouvement de ces derniers, ceci, malgré une fréquence de rafraîchissement faible (50Hz-60Hz).

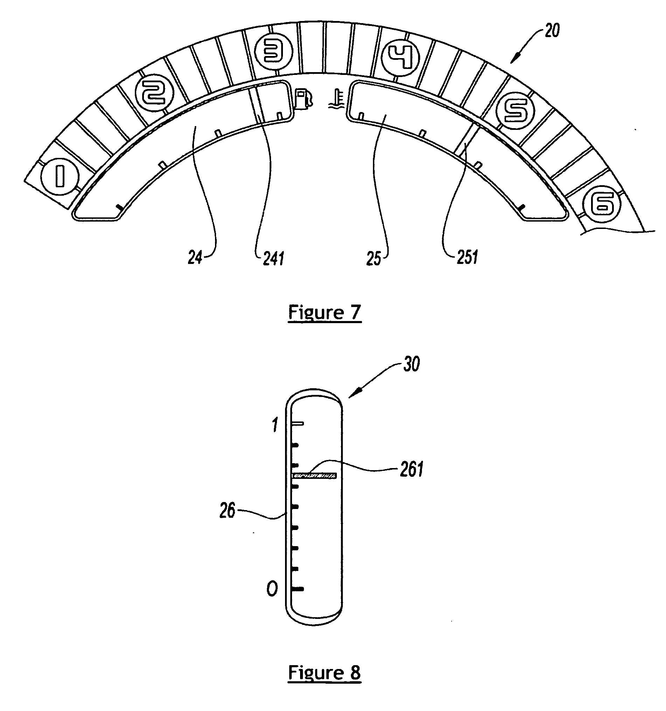

En référence à la figure 7 représentant une deuxième forme de réalisation d'un indicateur, l'indicateur 20 se présente sous la forme de deux portions de disque graduées 24, 25 indiquant respectivement les quantités de carburant et de liquide de refroidissement restant dans le véhicule. Les pointeurs 241, 251, appartenant respectivement aux portions de disque graduées 24, 25, se présentent sous la forme de rectangles. Il va de soi que les modifications des caractéristiques physiques des pointeurs doivent être réalisées en fonction de la forme desdits pointeurs. C'est pourquoi, avec des pointeurs rectangulaires 241, 251, l'augmentation de l'épaisseur des pointeurs 241, 251 est réalisée dans la largeur du pointeur.

De manière similaire, en référence à la figure 8 représentant une troisième forme de réalisation d'un indicateur, l'indicateur 30, indiquant la quantité de carburant restant dans le véhicule, se présente sous la forme d'une ligne graduée verticale 26 dans laquelle se déplace un pointeur rectangulaire horizontal 261.

Il va de soi que de nombreuses formes d'indicateurs pourraient également convenir.

## Revendications

1. Procédé d'affichage d'un pointeur sur une surface d'affichage d'un tableau de bord de véhicule, dans lequel:
- on calcule une première position (P1) du pointeur sur la surface d'affichage (1) en fonction d'une première mesure réalisée par un capteur du véhicule;
- on affiche le pointeur (21) sur la surface d'affichage (1) à ladite première position (P1);
- on calcule une deuxième position (P2) du pointeur sur la surface d'affichage (1) en fonction d'une deuxième mesure réalisée par ledit capteur du véhicule;
- on affiche le pointeur (22) sur la surface d'affichage (1) à ladite deuxième position (P2);
procédé **caractérisé par le fait que** l'on rend flou les contours du pointeur (22), affiché à ladite deuxième position (P2), en fonction de l'écart (ΔP) entre les première et deuxième positions calculées.

2. Procédé selon la revendication 1, dans lequel on augmente l'épaisseur du pointeur (22), affiché à ladite deuxième position (P2), en fonction de l'écart (ΔP) entre les première et deuxième positions calculées.

3. Procédé selon l'une des revendications 1 à 2, dans lequel on augmente la transparence du pointeur (22), affiché à ladite deuxième position (P2), en fonction de l'écart (ΔP) entre les première et deuxième positions calculées.

4. Procédé selon l'une des revendications 1 à 3, dans lequel on affiche simultanément le pointeur (21, 22) aux première et deuxième positions.

5. Procédé selon la revendication 4, dans lequel le pointeur (21) affiché à la première position est plus transparent que le pointeur (22) affiché à la deuxième position.

6. Procédé selon l'une des revendications 1 à 5, dans lequel les caractéristiques physiques du pointeur (22) sont modifiées de manière uniforme.

7. Indicateur pour tableau de bord de véhicule, comprenant une surface d'affichage (1) sur laquelle est affiché un pointeur selon le procédé de l'une des revendications 1 à 6.

8. Indicateur pour tableau de bord de véhicule selon la revendication 7, comprenant un cadran circulaire.

## Patentansprüche

1. Verfahren zur Anzeige eines Zeigers auf einer Anzeigefläche eines Fahrzeug-Armaturenbretts, bei welchem:
- eine erste Stellung (P1) des Zeigers auf der Anzeigefläche (1) in Abhängigkeit von einer von einem Sensor des Fahrzeugs durchgeführten ersten Messung berechnet wird;
- der Zeiger (21) auf der Anzeigefläche (1) in der ersten Stellung (P1) angezeigt wird;
- eine zweite Stellung (P2) des Zeigers auf der Anzeigefläche (1) in Abhängigkeit von einer vom Sensor des Fahrzeugs durchgeführten zweiten Messung berechnet wird;
- der Zeiger (22) auf der Anzeigefläche (1) in der zweiten Stellung (P2) angezeigt wird;
wobei das Verfahren durch die Tatsache gekennzeichnet ist, dass die Konturen des in der zweiten Stellung (P2) angezeigten Zeigers (22) in Abhängigkeit vom Abstand (ΔP) zwischen der berechneten ersten und zweiten Stellung unscharf gemacht werden.

2. Verfahren nach Anspruch 1, bei welchem die Dicke des in der zweiten Stellung (P2) dargestellten Zeigers (22) in Abhängigkeit vom Abstand (ΔP) zwischen der berechneten ersten und zweiten Stellung vergrößert wird.

3. Verfahren nach einem der Ansprüche 1 bis 2, bei welchem die Transparenz des in der zweiten Stellung (P2) angezeigten Zeigers (22) in Abhängigkeit vom Abstand (ΔP) zwischen der berechneten ersten und zweiten Stellung vergrößert wird.

4. Verfahren nach einem der Ansprüche 1 bis 3, bei welchem der Zeiger (21, 22) gleichzeitig in der ersten und der zweiten Stellung angezeigt wird.

5. Verfahren nach Anspruch 4, bei welchem der in der ersten Stellung angezeigte Zeiger (21) transparenter als der in der zweiten Stellung angezeigte Zeiger (22) ist.

6. Verfahren nach einem der Ansprüche 1 bis 5, bei welchem die physikalischen Eigenschaften des Zeigers (22) gleichmäßig verändert werden.

7. Anzeigevorrichtung für ein Fahrzeug-Armaturenbrett, die eine Anzeigefläche (1) enthält, auf der ein Zeiger gemäß dem Verfahren nach einem der Ansprüche 1 bis 6 angezeigt wird.

8. Anzeigevorrichtung für ein Fahrzeug-Armaturenbrett nach Anspruch 7, die eine kreisförmige Skala enthält.

## Claims

1. Method of displaying a pointer on a display surface of a vehicle instrument panel, wherein:
- a first position (P1) of the pointer on the display surface (1) is calculated as a function of a first measurement carried out by a sensor in the vehicle;
- the pointer (21) is displayed on the display surface (1) at said first position (P1);
- a second position (P2) of the pointer on the display surface (1) is calculated as a function of a second measurement carried out by said sensor in the vehicle;
- the pointer (22) is displayed on the display surface (1) at said second position (P2);
said method being **characterised in that** the contours of the pointer (22) displayed at said second position (P2) are blurred as a function of the deviation (ΔP) between the first and second positions calculated.

2. Method according to claim 1, wherein the thickness of the pointer (22) displayed at said second position (P2) is increased as a function of the deviation (ΔP) between the first and second positions calculated.

3. Method according to one of claims 1 and 2, wherein the transparency of the pointer (22) displayed at said second position (P2) is increased as a function of the deviation (ΔP) between the first and second positions calculated.

4. Method according to one of claims 1 to 3, wherein the pointer (21, 22) is displayed at the first and second positions simultaneously.

5. Method according to claim 4, wherein the pointer (21) displayed at the first position is more transparent than the pointer (22) displayed at the second position.

6. Method according to one of claims 1 to 5, wherein the physical features of the pointer (22) are modified uniformly.

7. Indicator for a vehicle instrument panel, comprising a display surface (1) on which a pointer is displayed according to the method as claimed in one of claims 1 to 6.

8. Indicator for a vehicle instrument panel according to claim 7, comprising a circular dial.
